# EUROPÄISCHE PATENTSCHRIFT

(11) **EP 1 602 862 B1**
(45) Veröffentlichungstag und Bekanntmachung des Hinweises auf die Patenterteilung: **19.03.2008**
(21) Anmeldenummer: 05011984.1
(22) Anmeldetag: 03.06.2005
(51) Int. Cl.: F16H 63/32

(54) **Vorrichtung zur Übertragung von Schaltbewegungen in einem Kraftfahrzeug-Schaltgetriebe**
Device for conveying shift movement in a gearbox for vehicle
Dispositif de transmission du mouvement de changement de vitesse dans une boîte de vitesses pour véhicule

(30) Priorität: 03.06.2004 DE 102004027201
(43) Veröffentlichungstag der Anmeldung: 07.12.2005
(73) Patentinhaber: Selzer Fertigungstechnik GmbH & Co.KG, 35759 Driedorf-Roth (DE)
(72) Erfinder: Volk, Matthias, 35625 Hüttenberg (DE); Schnautz, Carsten, 35745 Herborn-Uckersdorf (DE)
(74) Vertreter: Oppermann, Mark

(56) Entgegenhaltungen:
- EP-A- 1 079 154
- DE-A1- 10 126 438
- DE-A1- 10 159 441
- DE-A1- 10 220 062

## Beschreibung

### TECHNISCHES GEBIET

Die Erfindung bezieht sich auf eine Vorrichtung zur Übertragung von Schaltbewegungen in einem Kraftfahrzeug-Schaltgetriebe gemäß dem Oberbegriff der Patentansprüche 1, 2 und 11, wie sie massenweise in der Automobilindustrie zum Einsatz kommen.

### STAND DER TECHNIK

Im Stand der Technik sind bereits Vorrichtungen zur Übertragung von Schaltbewegungen in einem Kraftfahrzeug-Schaltgetriebe bekannt, die eine Schaltgabel und eine Schaltschiene aufweisen, welche mittels eines rechtwinklig zur Schaltschienenachse gerichteten Schwenkzapfens in Richtung der Schaltschienenachse relativ zueinander unverschiebbar festgelegt sind, wobei die Schaltgabel durch mindestens zwei gegenüberliegende, zueinander planparallele Führungsflächen gegenüber der Schaltschiene geführt um die Schwenkzapfenachse um einen geringen Winkelbetrag relativ zur Schaltschiene verschwenkbar ist. Das hier ermöglichte, geringe Schwenkwinkelspiel um etwa 1 bis 2° dient dazu, im Betrieb auftretende Taumelbewegungen der Schaltmuffe, in welche die Schaltgabel mit ihren Gabelenden eingreift, auszugleichen und somit die Übertragung von Schwingungen in das Schaltgestänge zu vermeiden.

Eine solche Vorrichtung ist in der EP-A-1 079 154 der Anmelderin offenbart. Bei diesem Stand der Technik ist an die Schaltgabel ein Aufnahmevorsprung für die Aufnahme der Schaltschiene schmiedetechnisch angeformt, der eine Öffnung aufweist, an der die zwei gegenüberliegenden, zueinander planparallelen Führungsflächen durch spanende Bearbeitung des Aufnahmevorsprungs ausgebildet sind, welche die Schaltgabel verschwenkbar um den durch den Aufnahmevorsprung senkrecht zu den Führungsflächen und durch die Schaltschiene hindurchgeführten Schwenkzapfen an der Schaltschiene führen.

Obgleich bei diesem Stand der Technik die Schaltgabel sehr toleranzarm und dennoch leichtgängig an der Schaltschiene schwenkgelagert ist, ist die vorbekannte Vorrichtung im Hinblick auf eine wirtschaftliche Herstellung noch verbesserungsbedürftig.

Eine Vorrichtung zur Übertragung von Schaltbewegungen in einem Kraftfahrzeug-Schaltgetriebe, welche die Oberbegriffsmerkmale der Patentansprüche 1, 2 und 11 aufweist, ist aus der DE-A-101 26 438 bekannt.

### DARSTELLUNG DER ERFINDUNG

Der Erfindung liegt demgemäß die Aufgabe zugrunde, eine gemessen am Stand der Technik kostengünstiger herstellbare, eine Schaltgabel und eine Schaltschiene aufweisende Vorrichtung zur Übertragung von Schaltbewegungen in einem Kraftfahrzeug-Schaltgetriebe zu schaffen, bei der die Schaltgabel möglichst toleranzarm an der Schaltschiene schwenkgelagert ist.

Diese Aufgabe wird durch die in den Patentansprüchen 1, 2 bzw. 11 angegebenen Merkmale gelöst. Vorteilhafte bzw. zweckmäßige Weiterbildungen der Erfindung sind Gegenstand der Patentansprüche 3 bis 10 bzw. 12 und 13.

In einer ersten erfindungsgemäßen Alternative weist bei einer Vorrichtung zur Übertragung von Schaltbewegungen in einem Kraftfahrzeug-Schaltgetriebe, welche eine Schaltgabel und eine Schaltschiene hat, die mittels eines rechtwinklig zur Schaltschienenachse gerichteten Schwenkzapfens in Richtung der Schaltschienenachse relativ zueinander unverschiebbar festgelegt sind, wobei die Schaltgabel durch mindestens zwei gegenüberliegende zueinander planparallele Führungsflächen gegenüber der Schaltschiene geführt um die Schwenkzapfenachse um einen geringen Winkelbetrag relativ zur Schaltschiene verschwenkbar ist und wenigstens eine der Führungsflächen an einem Führungsteil aus einem Flachmaterial ausgebildet ist, welches fest mit der Schaltgabel verbunden ist; die Schaltgabel einen Grundkörper auf, der aus einem Flachmaterial hergestellt ist und eine in einer Draufsicht gesehen im wesentlichen rechteckige Basis mit zwei Längsseiten und zwei Querseiten aufweist, wobei sich von jeder Querseite ein Schaltgabelarm wegerstreckt, während sich an jede Längsseite ein Führungsteil anschließt, welches von der Basis rechtwinklig abgebogen ist, so daß die Führungsteile einteilig mit dem Grundkörper der Schaltgabel ausgebildet sind.

In einer zweiten erfindungsgemäßen Alternative weist bei einer Vorrichtung zur Übertragung von Schaltbewegungen in einem Kraftfahrzeug-Schaltgetriebe, welche eine Schaltgabel und eine Schaltschiene hat, die mittels eines rechtwinklig zur Schaltschienenachse gerichteten Schwenkzapfens in Richtung der Schaltschienenachse relativ zueinander unverschiebbar festgelegt sind, wobei die Schaltgabel durch mindestens zwei gegenüberliegende zueinander planparallele Führungsflächen gegenüber der Schaltschiene geführt um die Schwenkzapfenachse um einen geringen Winkelbetrag relativ zur Schaltschiene verschwenkbar ist und wenigstens eine der Führungsflächen an einem Führungsteil aus einem Flachmaterial ausgebildet ist, welches fest mit der Schaltgabel verbunden ist; die Schaltgabel einen Grundkörper auf, der aus einem Flachmaterial besteht, wobei das Führungsteil als zunächst vom Grundkörper der Schaltgabel separates Teil hergestellt ist, das form- und ggf. kraftschlüssig mit dem Grundkörper verbunden ist, wofür der Grundkörper der Schaltgabel eine in einer Draufsicht gesehen im wesentlichen rechteckige Basis mit zwei Längsseiten und zwei Querseiten aufweist, wobei sich von jeder Querseite ein Schaltgabelarm wegerstreckt, während sich an jede Längsseite wenigstens ein Vorsprung anschließt, der eine dazu komplementär geformte Öffnung in einem der jeweiligen Längsseite der Basis zugeordneten Führungsteil durchgreift und mit letzterem warmvernietet ist, so daß das jeweilige Führungsteil mit der Basis einen rechten Winkel einschließt.

In einer dritten erfindungsgemäßen Alternative schließlich ist bei einer Vorrichtung zur Übertragung von Schaltbewegungen in einem Kraftfahrzeug-Schaltgetriebe, welche eine Schaltgabel und eine Schaltschiene hat, die mittels eines rechtwinklig zur Schaltschienenachse gerichteten Schwenkzapfens in Richtung der Schaltschienenachse relativ zueinander unverschiebbar festgelegt sind, wobei die Schaltgabel durch mindestens zwei gegenüberliegende zueinander planparallele Führungsflächen gegenüber der Schaltschiene geführt um die Schwenkzapfenachse um einen geringen Winkelbetrag relativ zur Schaltschiene verschwenkbar ist und wenigstens eine der Führungsflächen an einem Führungsteil aus einem Flachmaterial ausgebildet ist; das Führungsteil durch einen an der Schaltschiene befestigten, ebenen Blechstreifen gebildet, dessen eine Hauptfläche eine der Führungsflächen ausbildet, während die Schaltschiene mit einer Ausnehmung versehen ist, welche die andere Führungsfläche ausbildet, wobei die Schaltgabel einen aus einem Flachmaterial hergestellten Grundkörper aufweist, der im Bereich einer ebenen Basis zwischen der Führungsfläche an der Ausnehmung der Schaltschiene und der Führungsfläche am Führungsteil aufgenommen ist.

Ein Flachmaterial, d.h. ein Material, dessen Abmessung in der Dickenrichtung gegenüber den Abmessungen in den Quer- und Längsrichtungen deutlich kleiner ist und das bereits parallele Hauptflächen aufweist, ist zunächst sehr kostengünstig im Handel erhältlich. An einem Flachmaterial lassen sich sodann die benötigten ebenen Führungsflächen auf einfache und damit kostengünstige Weise und mit engen Toleranzen durch spanloses Werkstofftrennen, z.B. Feinschneiden herstellen, wenn nicht sogar die Führungsfläche schon durch eine der Hauptflächen des Flachmaterials, d.h. dessen Ober- oder Unterseite ausgebildet ist. Eine schmiedetechnische Umformung der Schaltgabel und eine sich daran anschließende spanende Bearbeitung der Führungsflächen, wie sie im gattungsbildenden Stand der Technik vorgesehen sind, sind mithin entbehrlich.

Bei der ersten erfindungsgemäßen Alternative besteht die Vorrichtung in vorteilhafter Weise aus nur wenigen, miteinander zu fügenden Bauteilen, was auch deren Montage vereinfacht.

Dadurch, daß bei der zweiten erfindungsgemäßen Alternative das Führungsteil als zunächst vom Grundkörper der Schaltgabel separates Teil hergestellt ist, das form- und ggf. kraftschlüssig mit dem Grundkörper verbunden ist, besteht der Vorteil, daß das Flachmaterial des Führungsteils den jeweiligen Funktionserfordernissen entsprechend hinsichtlich der Materialdicke und des Werkstoffs unabhängig von dem Flachmaterial des Schaltgabel-Grundkörpers gewählt werden kann. Bei dieser Alternative erfolgt dann eine Warmvernietung der beteiligten Bauteile.

Grundsätzlich ist es denkbar, daß sich die Schaltgabelarme und die Führungsteile in Dickenrichtung der Grundkörperbasis der Schaltgabel gesehen in die gleiche Richtung von der Basis wegerstrecken. Insbesondere im Hinblick auf eine einfache Herstellung und Montage der Vorrichtung ist es jedoch bevorzugt, wenn sich die Schaltgabelarme einerseits und die Führungsteile andererseits in Dickenrichtung der Basis gesehen in entgegengesetzte Richtungen von der Basis wegerstrecken.

Im weiteren Verfolg des Erfindungsgedankens kann jedes Führungsteil mit einer Aussparung zur Aufnahme der Schaltschiene versehen sein, wobei jede Aussparung ein Paar planparalleler Führungsflächen aufweist, so daß die Schaltgabel vorteilhaft über zwei axial voneinander beabstandete Paare von Führungsflächen mit einem nur sehr geringen Kippspiel an der Schaltschiene geführt ist.

Hierbei kann die Basis des Schaltgabel-Grundkörpers mit einer zentralen Bohrung zur Aufnahme des Schwenkzapfens versehen sein, wobei die Aussparung jedes Führungsteils als Schlitz ausgebildet ist, der sich parallel zur Basis des Schaltgabel-Grundkörpers erstreckt, und wobei sich die Schlitze in einer Drehrichtung um die Schwenkzapfenachse gesehen in die gleiche Richtung öffnen. Eine derart ausgebildete Vorrichtung läßt sich besonders leicht vormontieren, wobei die Schaltgabel mit ihrer zentralen Bohrung derart über den an der Schaltschiene angebrachten Schwenkzapfen gesetzt wird, daß sich die Schaltschiene zwischen den Führungsteilen befindet. In der Folge braucht die Schaltgabel nur noch in Öffnungsrichtung der Schlitze um 90° um die Schwenkzapfenachse gedreht werden, wobei sich die Schlitze in den Führungsteilen über die Schaltschiene schieben, um die Vormontage abzuschließen.

Einer einfachen, werkzeuglosen Vormontage förderlich ist auch eine Ausgestaltung des Schwenkzapfens, bei der dieser in einem mittleren Bereich mit einem Bund versehen ist, wobei sich auf der einen Seite des Bundes der Schwenkzapfen mit einem Ende in die zentrale Bohrung in der Basis des Schaltgabel-Grundkörpers hinein erstreckt, während der Schwenkzapfen auf der anderen Seite des Bundes mit seinem anderen Ende in eine Bohrung in der Schaltschiene eingesetzt ist.

In einer zu der vorbeschriebenen Ausgestaltung der Aussparungen zur Aufnahme der Schaltschiene alternativen Ausbildung können der lichte Abstand der Führungsflächen an der Aussparung des jeweiligen Führungsteils einerseits und die Abmessungen der Schaltschiene in einer Richtung senkrecht zur Schaltschienenachse andererseits derart aufeinander abgestimmt sein, daß die Schaltschiene in Richtung der Schaltschienenachse in die Aussparung des jeweiligen Führungsteils einführbar ist, um die Schaltgabel mittels des Schwenkzapfens an der Schaltschiene zu montieren. Dies gestattet in vorteilhafter Weise ein stirnseitiges Aufschieben der Schaltgabel auf die Schaltschiene, so daß der Verbund aus Schaltgabel und Schaltschiene nicht außerhalb des Kraftfahrzeug-Schaltgetriebes vormontiert werden muß, vielmehr die Schaltgabel noch während der Montage des Schaltgetriebes an der Schaltschiene angebracht werden kann, die dabei aus einem einfachen Rundmaterial mit einer vorbestimmten Durchmessertoleranz bestehen kann.

Bei dieser Ausgestaltung kann die Aussparung eine umfänglich geschlossene Form haben, insbesondere als Langloch ausgebildet sein, was auf denkbar einfache Weise ein Auffedern der Aussparung in einer Richtung senkrecht zu den Führungsflächen selbst bei hohen an den Schaltgabelarmen angreifenden Kräften verhindert.

Wenngleich bei dieser Ausgestaltung der Aussparungen zur Aufnahme der Schaltschiene der Schwenkzapfen endseitig mit einem Gewindeabschnitt versehen sein kann, der in einen komplementären Gewindeabschnitt in der Schaltgabel oder der Schaltschiene einschraubbar ist, um den Schwenkzapfen in seiner Achsrichtung verliersicher festzulegen, ist es im Hinblick auf eine einfache Montage bevorzugt, den Schwenkzapfen mittels eines Sicherungselements an der Schaltschiene oder der Schaltgabel verliersicher festzulegen. Dabei kann es sich bei dem Sicherungselement vorteilhaft um einen Federclip handeln, der in eine am Schwenkzapfen angebrachte Radialnut eingreift und die Schaltschiene umgreift, um den Schwenkzapfen verliersicher an der Schaltschiene festzulegen.

Bei der dritten erfindungsgemäßen Alternative ist das aus einem Flachmaterial bestehende Führungsteil als Alternative zu einer festen Verbindung mit der Schaltgabel fest mit der Schaltschiene verbunden.

Zur Befestigung des Blechstreifens an der Schaltschiene können etwa Schrauben vorgesehen sein, die Bohrungen im Blechstreifen durchgreifen und in zugeordnete Gewindelöcher in der Schaltschiene eingeschraubt sind. Im Hinblick auf eine kostengünstige Herstellung der Vorrichtung bevorzugt ist jedoch eine Ausgestaltung, bei der das Führungsteil an der Schaltschiene mittels Nieten befestigt ist, die zu beiden Seiten der Ausnehmung Bohrungen im Führungsteil und in der Schaltschiene durchgreifen.

Schließlich kann auch bei dieser Alternative der Schwenkzapfen in einem mittleren Bereich mit einem Bund versehen sein, wobei sich auf der einen Seite des Bundes der Schwenkzapfen mit einem Ende in eine zentrale Bohrung im Führungsteil hinein erstreckt, während der Schwenkzapfen auf der anderen Seite des Bundes mit seinem anderen Ende in eine Bohrung in der Ausnehmung der Schaltschiene eingesetzt ist, so daß der Schwenkzapfen auf einfache Weise verliersicher gehalten ist.

### KURZE BESCHREIBUNG DER ZEICHNUNGEN

Im folgenden wird die Erfindung anhand bevorzugter Ausführungsbeispiele unter Bezugnahme auf die beigefügten Zeichnungen näher erläutert, wobei gleiche oder entsprechende Teile mit den gleichen Bezugszeichen versehen sind. In den Zeichnungen zeigen:
- Fig. 1: eine abgebrochene perspektivische Darstellung einer Vorrichtung zur Übertragung von Schaltbewegungen nach einem ersten Ausführungsbeispiel der Erfindung, die eine Schaltgabel mit einteilig damit ausgebildeten Führungsteilen aus Flachmaterial, eine Schaltschiene und einen Schwenkzapfen in der Form eines Bundbolzens aufweist,
- Fig. 2: eine abgebrochene Draufsicht auf die Vorrichtung gemäß Fig. 1,
- Fig. 3: eine abgebrochene Schnittansicht der Vorrichtung gemäß Fig. 1 entsprechend der Schnittverlaufslinie III-III in Fig. 2,
- Fig. 4: eine Schnittansicht der Vorrichtung gemäß Fig. 1 entsprechend der Schnittverlaufslinie IV-IV in Fig. 3,
- Fig. 5: eine perspektivische Darstellung des Grundkörpers der bei der Vorrichtung gemäß Fig. 1 verwendeten Schaltgabel,
- Fig. 6: eine Draufsicht auf den Schaltgabel-Grundkörper gemäß Fig. 5,
- Fig. 7: eine Vorderansicht des Schaltgabel-Grundkörpers gemäß Fig. 5,
- Fig. 8: eine Seitenansicht des Schaltgabel-Grundkörpers gemäß Fig. 5 von links in den Fig. 6 und 7,
- Fig. 9: eine abgebrochene perspektivische Darstellung einer Vorrichtung zur Übertragung von Schaltbewegungen nach einem zweiten Ausführungsbeispiel der Erfindung, die eine Schaltgabel mit daran formschlüssig angebrachten Führungsteilen aus Flachmaterial, eine Schaltschiene und einen Schwenkzapfen in der Form eines Bundbolzens aufweist,
- Fig. 10: eine abgebrochene Draufsicht auf die Vorrichtung gemäß Fig. 9,
- Fig. 11: eine abgebrochene Schnittansicht der Vorrichtung gemäß Fig. 9 entsprechend der Schnittverlaufslinie XI-XI in Fig. 10,
- Fig. 12: eine Schnittansicht der Vorrichtung gemäß Fig. 9 entsprechend der Schnittverlaufslinie XII-XII in Fig. 11,
- Fig. 13: eine perspektivische Darstellung des SchaltgabelGrundkörpers und eines der Führungsteile der Vorrichtung gemäß Fig. 9, die veranschaulicht, wie das Führungsteil formschlüssig an der Schaltgabel angebracht wird,
- Fig. 14: eine abgebrochene perspektivische Darstellung einer Vorrichtung zur Übertragung von Schaltbewegungen nach einem dritten Ausführungsbeispiel der Erfindung, die eine Schaltgabel mit einteilig damit ausgebildeten Führungsteilen aus Flachmaterial, eine Schaltschiene, einen Schwenkzapfen und ein Sicherungselement zum Sichern des Schwenkzapfens an der Schaltschiene aufweist,
- Fig. 15: eine abgebrochene Draufsicht auf die Vorrichtung gemäß Fig. 14,
- Fig. 16: eine abgebrochene Schnittansicht der Vorrichtung gemäß Fig. 14 entsprechend der Schnittverlaufslinie XVI-XVI in Fig. 15,
- Fig. 17: eine Schnittansicht der Vorrichtung gemäß Fig. 14 entsprechend der Schnittverlaufslinie XVII-XVII in Fig. 16,
- Fig. 18: eine perspektivische Darstellung des Grundkörpers der bei der Vorrichtung gemäß Fig. 14 verwendeten Schaltgabel,
- Fig. 19: eine Draufsicht auf den Schaltgabel-Grundkörper gemäß Fig. 18,
- Fig. 20: eine Vorderansicht des Schaltgabel-Grundkörpers gemäß Fig. 18,
- Fig. 21: eine Seitenansicht des Schaltgabel-Grundkörpers gemäß Fig. 18 von links in den Fig. 19 und 20,
- Fig. 22: eine im Maßstab vergrößerte, perspektivische Darstellung des bei der Vorrichtung gemäß Fig. 14 verwendeten Sicherungselements,
- Fig. 23: eine abgebrochene perspektivische Darstellung einer Vorrichtung zur Übertragung von Schaltbewegungen nach einem vierten Ausführungsbeispiel der Erfindung, die eine Schaltgabel, eine Schaltschiene, einen Schwenkzapfen in der Form eines Bundbolzens sowie ein an der Schaltschiene befestigtes Führungsteil aus Flachmaterial aufweist,
- Fig. 24: eine beidseitig abgebrochene Draufsicht auf die Vorrichtung gemäß Fig. 23,
- Fig. 25: eine beidseitig abgebrochene Schnittansicht der Vorrichtung gemäß Fig. 23 entsprechend der Schnittverlaufslinie XXV-XXV in Fig. 24,
- Fig. 26: eine Schnittansicht der Vorrichtung gemäß Fig. 23 entsprechend der Schnittverlaufslinie XXVI-XXVI in Fig. 25,
- Fig. 27: eine perspektivische Darstellung des Grundkörpers der bei der Vorrichtung gemäß Fig. 23 verwendeten Schaltgabel,
- Fig. 28: eine perspektivische Darstellung des bei der Vorrichtung gemäß Fig. 23 verwendeten Führungsteils,
- Fig. 29: eine beidseitig abgebrochene Unteransicht der bei der Vorrichtung gemäß Fig. 23 verwendeten Schaltschiene im Lagerbereich für die Schaltgabel,
- Fig. 30: eine beidseitig abgebrochene Seitenansicht der Schaltschiene gemäß Fig. 29 und
- Fig. 31: eine beidseitig abgebrochene Draufsicht auf die Schaltschiene gemäß Fig. 29.

### DETAILLIERTE BESCHREIBUNG DER AUSFÜHRUNGSBEISPIELE

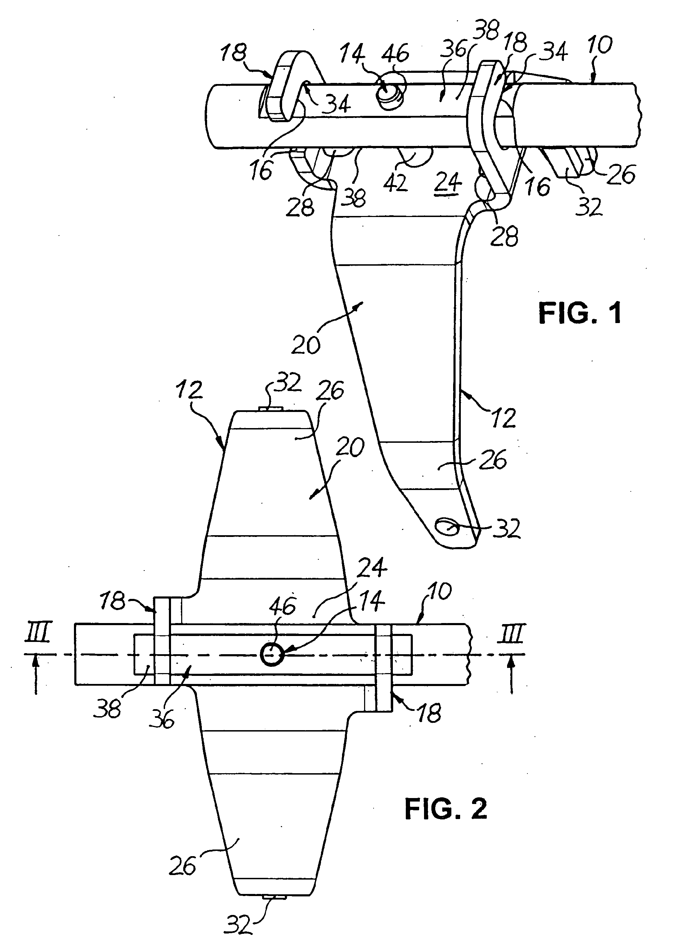

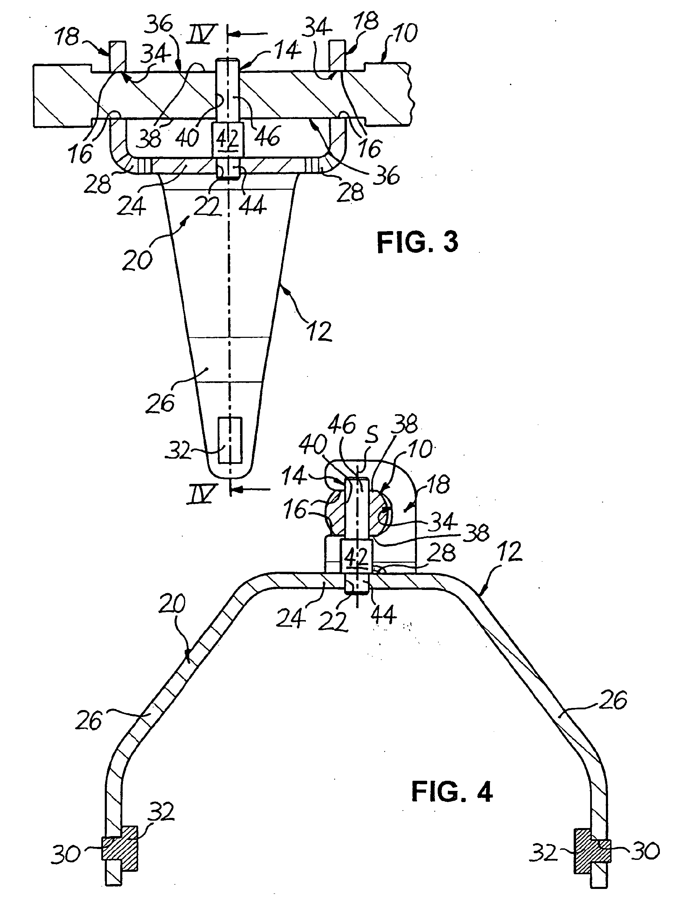

Die Fig. 1 bis 8 veranschaulichen ein erstes Ausführungsbeispiel einer Vorrichtung zur Übertragung von Schaltbewegungen in einem Kraftfahrzeug-Schaltgetriebe im nicht darin eingebauten Zustand, die eine Schaltschiene 10 und eine daran auf besondere Art und Weise schwenkgelagerte Schaltgabel 12 aufweist. Genauer gesagt sind die Schaltschiene 10 und die Schaltgabel 12 mittels eines rechtwinklig zur Schaltschienenachse gerichteten Schwenkzapfens 14 in Richtung der Schaltschienenachse, d.h. in Längsrichtung der Schaltschiene 10 relativ zueinander unverschiebbar festgelegt, wobei die Schaltgabel 12 durch mindestens zwei gegenüberliegende zueinander planparallele Führungsflächen 16 gegenüber der Schaltschiene 10 geführt um die Schwenkzapfenachse S (siehe Fig. 4) um einen geringen Winkelbetrag relativ zur Schaltschiene 10 verschwenkbar ist. Wesentlich ist, daß, wie nachfolgend noch näher erläutert werden wird, wenigstens eine der Führungsflächen 16 an einem Führungsteil 18 aus einem Flachmaterial ausgebildet ist, welches im dargestellten Ausführungsbeispiel fest mit der Schaltgabel 12 verbunden ist.

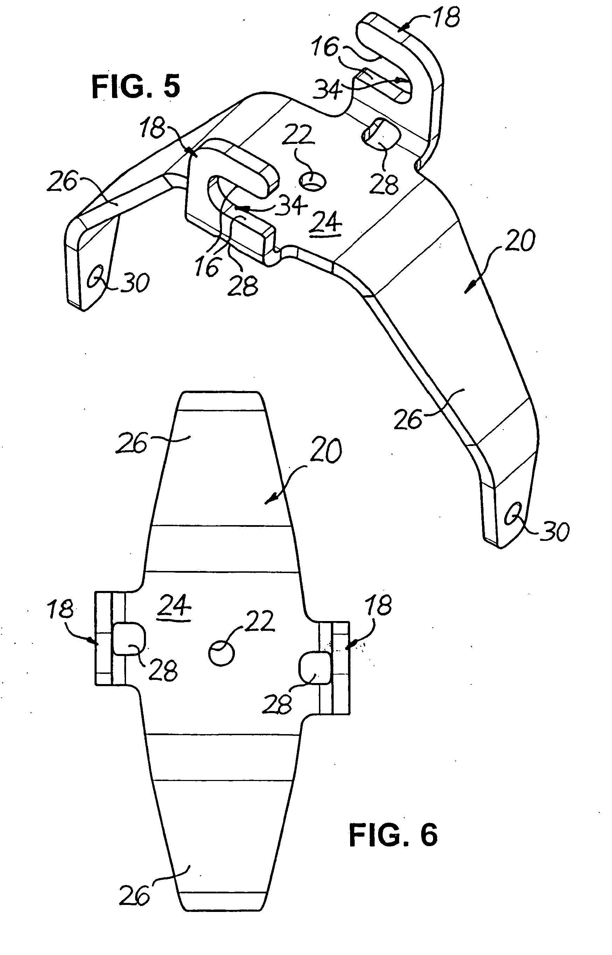

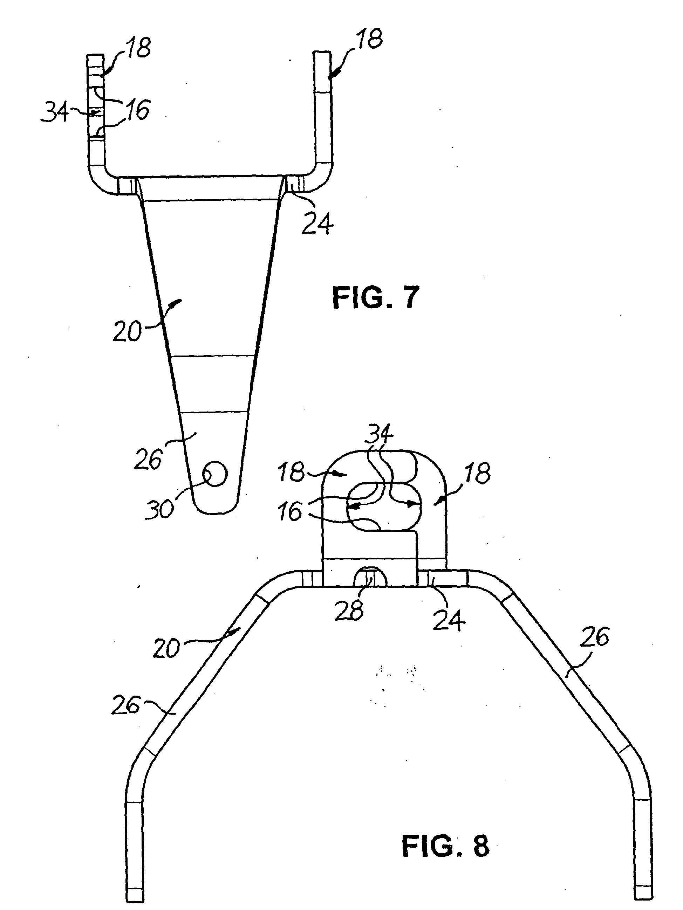

Wie insbesondere die Fig. 5 bis 8 zeigen, weist die Schaltgabel 12 einen Grundkörper 20 auf, der aus einem metallischen Flachmaterial hergestellt ist, wobei zwei Führungsteile 18 einteilig mit dem Grundkörper 20 der Schaltgabel 12 ausgebildet ist. Genauer gesagt hat der Grundkörper 20 der Schaltgabel 12 eine in einer Draufsicht gesehen (siehe die Fig. 5 und 6) im wesentlichen rechteckige, mit einer zentralen Bohrung 22 zur Aufnahme des Schwenkzapfens 14 versehene, ebene Basis 24 mit zwei Längsseiten und zwei Querseiten. Von jeder Querseite der Basis 24 erstreckt sich in bilateraler Symmetrie bezüglich einer gedachten, durch die Längsachse der Bohrung 22 verlaufenden Ebene ein Schaltgabelarm 26 weg, während sich - in Liniensymmetrie bezüglich der Mittelachse der Bohrung 22 - an jede Längsseite der Basis 24 eines der Führungsteile 18 anschließt, die, wie die Fig. 3 und 7 zeigen, rechtwinklig von der Basis 24 abgebogen sind. Zur Erleichterung des Biegevorgangs ist hierbei das Flachmaterial des Schaltgabel-Grundkörpers 20 im Übergangsbereich von Basis 24 und Führungsteil 18 jeweils mit einer Aussparung 28 versehen. Wie des weiteren in den Fig. 1, 3, 4, 5, 7 und 8 deutlich zu erkennen ist, erstrecken sich die Schaltgabelarme 26 einerseits und die Führungsteile 18 andererseits in Dickenrichtung der Basis 24 gesehen in entgegengesetzte Richtungen von der Basis 24 weg.

Gemäß insbesondere den Fig. 4 und 8 sind die Schaltgabelarme 26 noch ein zweites Mal abgekröpft, derart, daß ihre freien Enden bezüglich der Basis 24 rechtwinklig stehen. Die freien Enden der Schaltgabelarme 26 sind im dargestellten Ausführungsbeispiel jeweils mit einer Befestigungsbohrung 30 versehen, die der Befestigung von Eingriffskörpern 32 (vergl. die Fig. 1, 3 und 4) - auch "Padden" genannt - dienen, über welche die Schaltgabel 12 in an sich bekannter Weise mit der Schalt- bzw. Schiebemuffe (nicht dargestellt) des Kraftfahrzeug-Schaltgetriebes wirkverbindbar ist.

Jedes Führungsteil 18 ist des weiteren gemäß insbesondere den Fig. 1, 3 und 4 mit einer Aussparung 34 zur Aufnahme der Schaltschiene 10 versehen, wobei jede Aussparung 34 ein Paar planparalleler Führungsflächen 16 aufweist, die ihrerseits parallel zu der Basis 24 des Grundkörpers 20 verlaufen. Bei dem in den Fig. 1 bis 8 dargestellten ersten Ausführungsbeispiel ist die Aussparung 34 jedes Führungsteils 18 als Schlitz ausgebildet, der sich parallel zur Basis 24 des Schaltgabel-Grundkörpers 20 erstreckt, wobei sich die Schlitze in den Führungsteilen 18 gemäß insbesondere den Fig. 1 und 5 in einer Drehrichtung um die Achse S des Schwenkzapfens 14 gesehen in die gleiche Richtung öffnen. Hierbei ist die Tiefe der Schlitze derart gewählt, daß im montierten Zustand der Vorrichtung zwischen dem jeweiligen Schlitzende und der Schaltschiene 10 ein Schwenkspiel vorhanden ist, wie in Fig. 4 zu erkennen ist.

Die Schaltschiene 10 ist im dargestellten Ausführungsbeispiel aus einem metallischen Rundmaterial hergestellt, welches nahe seinem Ende auf gegenüberliegenden Seiten mit jeweils einer Abflachung oder Ausnehmung 36 versehen ist, die planparallele Gegenflächen 38 für die Führungsflächen 16 an den Führungsteilen 18 ausbilden. Hierbei sind die Ausnehmungen 36 z.B. durch Räumen derart an der Schaltschiene 10 angearbeitet, daß die Gegenflächen 38 einen Abstand zueinander aufweisen, der bezüglich des lichten Abstands der Führungsflächen 16 an den Führungsteilen 18 ein geringfügiges Untermaß hat. Schließlich ist auch die Schaltschiene 10 mittig bezüglich der Ausnehmungen 36 mit einer durchgehenden Bohrung 40 zur Aufnahme des Schwenkzapfens 14 versehen, die senkrecht zur Längsachse der Schaltschiene 10 und zu den Gegenflächen 38 in die Schaltschiene 10 eingebracht ist.

Bei dem ersten Ausführungsbeispiel der Vorrichtung ist gemäß den Fig. 3 und 4 schließlich der metallische Schwenkzapfen 14 in einem mittleren Bereich mit einem Bund 42 versehen. Dabei erstreckt sich der Schwenkzapfen 14 auf der einen Seite des Bundes 42 mit einem kürzeren Ende 44 in die zentrale Bohrung 22 in der Basis 24 des Schaltgabel-Grundkörpers 20 hinein, während der Schwenkzapfen 14 auf der anderen Seite des Bundes 42 mit seinem anderen, längeren Ende 46 in die Bohrung 40 in der Schaltschiene 10 eingesetzt ist. Die Länge des Bundes 42 ist hierbei so bemessen, daß sie geringfügig kürzer ist als der lichte Abstand zwischen der in den Fig. 3 und 4 oberen Hauptfläche der Basis 24 des Schaltgabel-Grundkörpers 20 und der dieser zugewandten Gegenfläche 38 an der entsprechenden Ausnehmung 36 der Schaltschiene 10. Da der Bund 42 des Schwenkzapfens 14 einen Außendurchmesser aufweist, der größer ist als der Innendurchmesser der Bohrungen 22, 40 in der Schaltgabel 12 bzw. der Schaltschiene 10, ist der auf beiden Seiten geringfügig über die Bohrungen 22, 40 vorstehende Schwenkzapfen 14 an der Vorrichtung verliersicher festgelegt.

Zur Herstellung der Vorrichtung werden zunächst die Schaltschiene 10, der Grundkörper 20 der Schaltgabel 12 und der Schwenkzapfen 14 vorgefertigt. Hierbei werden nach Ablängen der Schaltschiene 10 die Ausnehmungen 36 an der Schaltschiene 10 z.B. durch Räumen erzeugt, so daß die Gegenflächen 38 an der Schaltschiene 10 einen definierten Abstand zueinander haben.

Der Grundkörper 20 der Schaltgabel 12 wird - z.B. durch Feinschneiden aus einem Flachmaterial - zunächst als Flachteil mit seiner Basis 24, den Führungsteilen 18 und den Schaltgabelarmen 26 hergestellt, wobei zugleich die Aussparungen 28, 34 und ggf. die Befestigungsbohrungen 30 für die Eingriffskörper 32 erzeugt werden, bevor die Führungsteile 18 und die Schaltgabelarme 26 wie in Fig. 5 gezeigt definiert von der Basis 24 abgebogen werden. Bei dem Feinschneidvorgang ergibt sich bereits ein definierter Abstand der im wesentlichen rechtwinklig bezüglich der Hauptflächen des Grundkörpers 20 verlaufenden Führungsflächen 16 an der jeweiligen Aussparung 34. Der Schwenkzapfen 14 wird z.B. in einem Drehautomaten mit definierten Abmessungen seines Bundes 42 und der Enden 44, 46 fertigbearbeitet.

Zur Vormontage der Vorrichtung wird zunächst die Schaltschiene 10 zwischen die Führungsteile 18 des Schaltgabel-Grundkörpers 20 gesetzt. Sodann werden Schaltschiene 10 und Grundkörper 20 relativ zueinander verdreht, so daß die Führungsflächen 16 an den Aussparungen 34 des Grundkörpers 20 über die Gegenflächen 38 an den Ausnehmungen 36 der Schaltschiene 10 gleiten. In der Folge werden die Schaltschiene 10 und der Grundkörper 20 ausgerichtet und in zueinander genau justierter Lage festgelegt, worauf die Schaltschiene 10 und der Grundkörper 20 in dieser festgelegten Relativlage zur Bildung der durchmessergleichen Aufnahmebohrungen 22, 40 für den Schwenkzapfen 14 in einem Bohrvorgang gemeinsam gebohrt werden. Nach dem Bohrvorgang werden Schaltschiene 10 und Grundkörper 20 voneinander getrennt. Sodann wird die Schaltschiene 10 unter Zwischenfügung des Schwenkzapfens 14 wieder zwischen die Führungsteile 18 des Grundkörpers 20 gesetzt, wobei der Schwenkzapfen 14 mit seinen Enden 44 und 46 in die Bohrungen 22 bzw. 40 gleitet. Durch Verdrehen der Schaltschiene 10 relativ zum Grundkörper 20 um die Achse S des Schwenkzapfens 14 gelangen schließlich die Führungsflächen 16 an den Aussparungen 34 des Grundkörpers 20 wieder über die zugeordneten Gegenflächen 38 an den Ausnehmungen 36 der Schaltschiene 10. Nach Befestigen der Eingriffskörper 32 in den Befestigungsbohrungen 30 an den Schaltgabelarmen 26 kann jetzt die vormontierte Vorrichtung im Kraftfahrzeug-Schaltgetriebe in an sich bekannter Weise fertigmontiert werden.

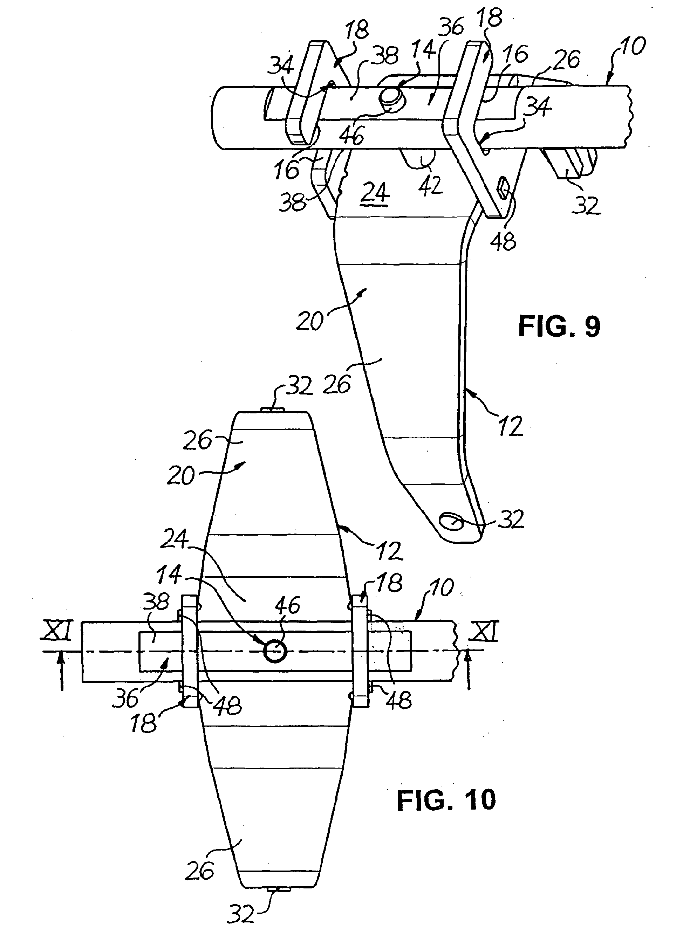

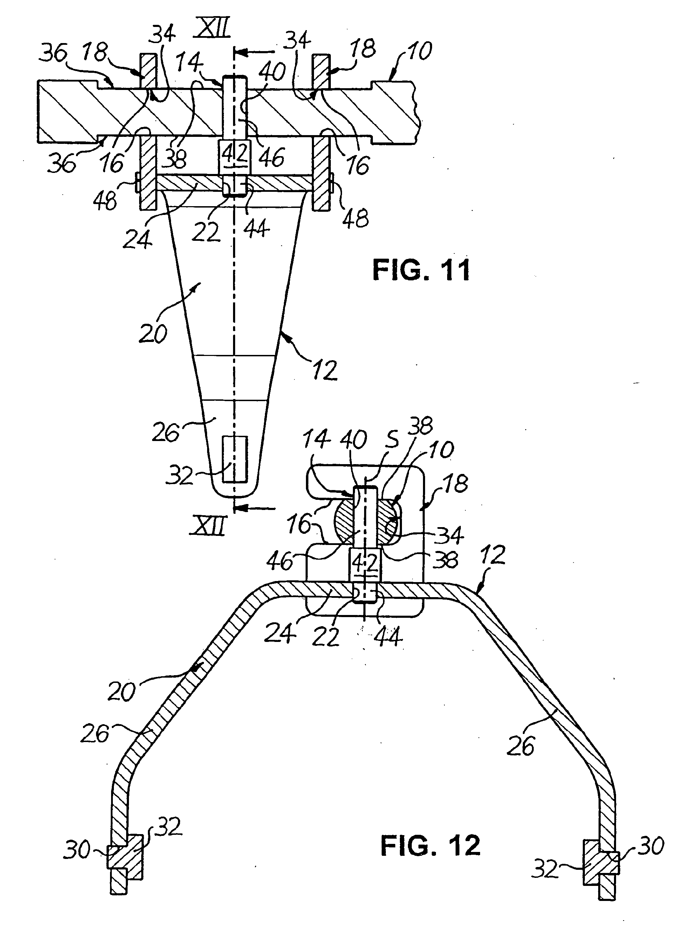

Im folgenden soll das zweite Ausführungsbeispiel der Vorrichtung unter Bezugnahme auf die Fig. 9 bis 13 nur insoweit beschrieben werden, als es sich von dem unter Bezugnahme auf die Fig. 1 bis 8 beschriebenen ersten Ausführungsbeispiel wesentlich unterscheidet.

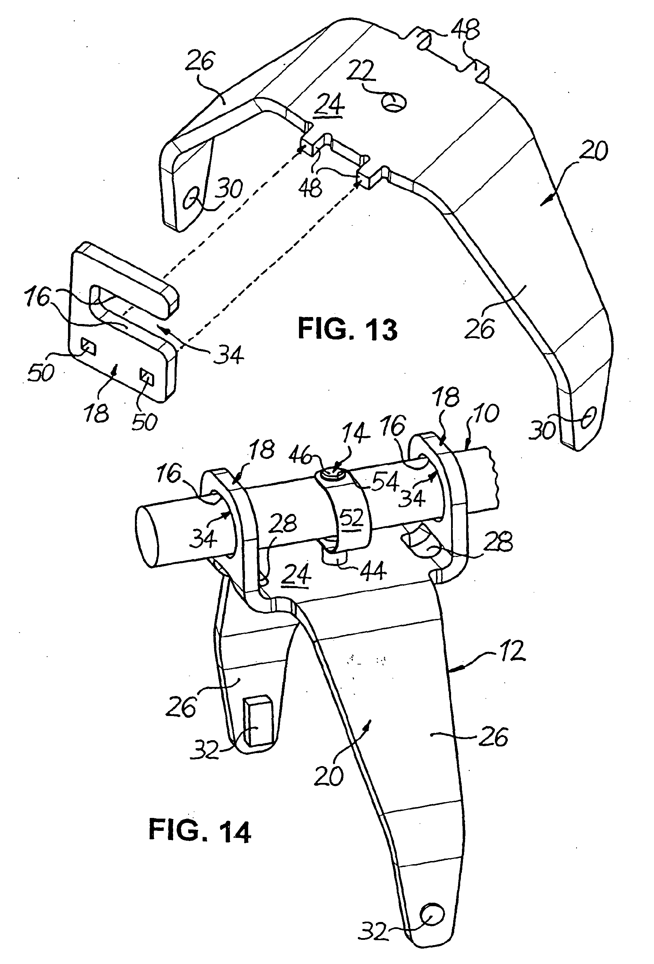

Auch bei dem zweiten Ausführungsbeispiel weist die Schaltgabel 12 einen Grundkörper 20 auf, der aus einem metallischen Flachmaterial besteht. Die Führungsteile 18 jedoch werden als zunächst vom Grundkörper 20 separate Teile aus einem metallischen Flachmaterial hergestellt, welches sich von dem Flachmaterial des Grundkörpers 20 unterscheiden kann aber nicht muß, bevor die Führungsteile 18 form- und ggf. kraftschlüssig mit dem Grundkörper 20 verbunden werden. Genauer gesagt hat der Grundkörper 20 der Schaltgabel 12 gemäß insbesondere der Fig. 13 eine in einer Draufsicht gesehen im wesentlichen rechteckige Basis 24 mit zwei Längsseiten und zwei Querseiten, wobei sich von jeder Querseite ein Schaltgabelarm 26 wegerstreckt. An jede Längsseite der Basis 24 indes schließen sich wenigstens ein, im dargestellten Ausführungsbeispiel zwei Vorsprünge 48 mit im wesentlichen rechteckigen Querschnitt an, die dazu im wesentlichen komplementär geformte Öffnungen 50 in dem der jeweiligen Längsseite der Basis 24 zugeordneten Führungsteil 18 durchgreifen und mit letzterem warmvernietet sind, so daß das jeweilige Führungsteil 18 fest mit der Basis 24 des Grundkörpers 20 verbunden ist und mit diesem einen rechten Winkel einschließt. Der so erzielten Formschlußverbindung zwischen der Basis 24 und den Führungsteilen 18 kann ein zusätzlicher Kraftschluß überlagert sein, der durch ein Übermaß des jeweiligen Vorsprungs 48 an der Basis 24 bezüglich der zugeordneten Öffnung 50 im jeweiligen Führungsteil 18 bewirkt wird, so daß die Führungsteile 18 schon vor dem Warmvernieten in der Art eines Preßsitzes an der Basis 24 festgelegt sind.

Die Herstellung bzw. Montage der Vorrichtung nach dem zweiten Ausführungsbeispiel unterscheidet sich von dem zum ersten Ausführungsbeispiel beschriebenen Verfahren nur hinsichtlich der Vorfertigung des Verbunds aus dem Schaltgabel-Grundkörper 20 und den Führungsteilen 18. Hierbei werden der Grundkörper 20 der Schaltgabel 12 mit seiner Basis 24, den Schaltgabelarmen 26 und den Vorsprüngen 48 einerseits und die Führungsteile 18 andererseits z.B. durch Feinschneiden als Flachteile hergestellt, wobei zugleich die Aussparungen 34 und Öffnungen 50 in den Führungsteilen 18 sowie ggf. die Befestigungsbohrungen 30 für die Eingriffskörper 32 an den Schaltgabelarmen 26 erzeugt werden. Sodann werden die Schaltgabelarme 26 definiert von der Basis 24 des Grundkörpers 20 abgebogen, worauf die Führungsteile 18 wie in Fig. 13 mit gestrichelten Linien angedeutet mit ihren Öffnungen 50 auf die Vorsprünge 48 an der Grundkörperbasis 24 aufgeschoben werden. Schließlich werden die über die Öffnungen 50 vorstehenden Enden der Vorsprünge 48 warmvernietet, um die Führungsteile 18 am Schaltgabel-Grundkörper 20 zu befestigen.

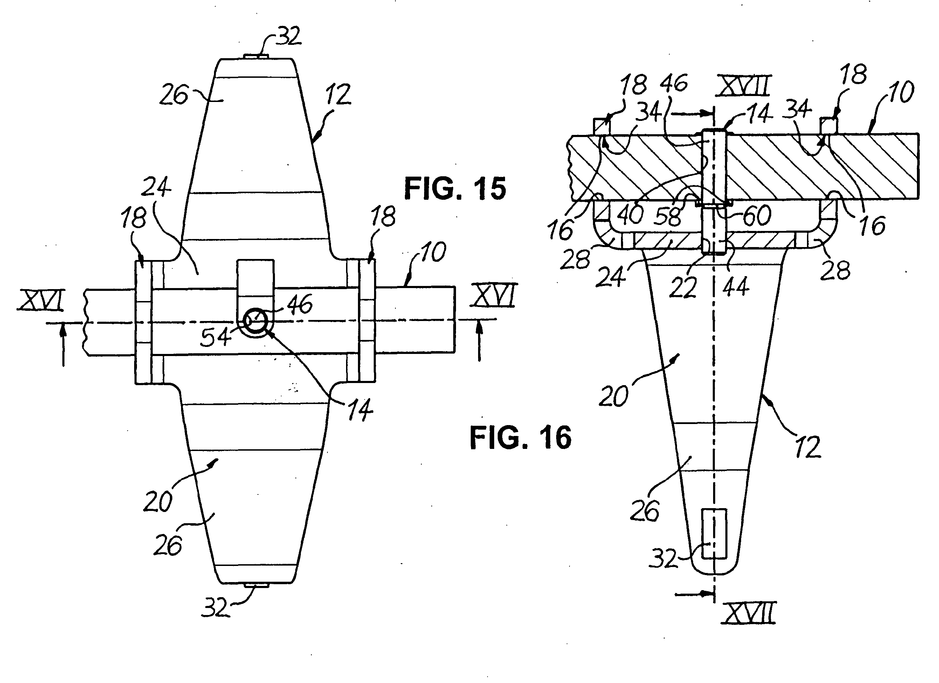

Auch das dritte Ausführungsbeispiel der Vorrichtung soll nachfolgend anhand der Fig. 14 bis 22 nur insoweit beschrieben werden, als es sich vom ersten und zweiten Ausführungsbeispiel wesentlich unterscheidet.

Um eine Montage der Einzelteile der Vorrichtung noch im Kraftfahrzeug-Schaltgetriebe zu gestatten, sind bei dem dritten Ausführungsbeispiel der lichte Abstand der Führungsflächen 16 an den Aussparungen 34 der Führungsteile 18 einerseits und die Abmessungen der Schaltschiene 10 in einer Richtung senkrecht zur Schaltschienenachse andererseits derart aufeinander abgestimmt, daß die Schaltschiene 10 in Richtung der Schaltschienenachse in die Aussparungen 34 der Führungsteils 18 einführbar ist bevor die Schaltgabel 12 mittels des Schwenkzapfens 14 an der Schaltschiene 10 montiert wird.

Hierbei hat gemäß Fig. 14 der die Schaltgabel 12 tragende Abschnitt der Schaltschiene 10 einen durchgehend kreisrunden Querschnitt - ohne Ausnehmungen wie bei den vorbeschriebenen Ausführungsbeispielen - mit einem Außendurchmesser, der geringfügig kleiner ist als der lichte Abstand der Führungsflächen 16 an den Aussparungen 34 in den Führungsteilen 18. Die Bohrung 40 zur Aufnahme des Schwenkzapfens 14 ist dabei so in die Schaltschiene 10 eingebracht, daß sie die Längsachse der Schaltschiene 10 im rechten Winkel schneidet.

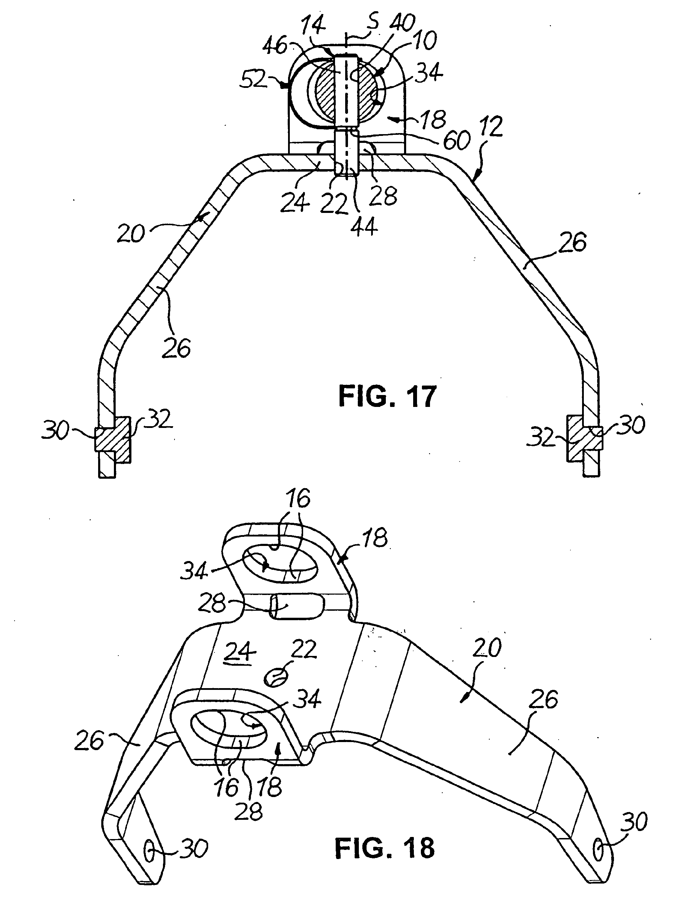

Wie insbesondere in den Fig. 18 bis 21 zu erkennen ist, unterscheidet sich der Grundkörper 20 der Schaltgabel 12 bei dem dritten Ausführungsbeispiel von dem Grundkörper bei dem ersten Ausführungsbeispiel im wesentlichen dadurch, daß auch die Führungsteile 18 in bilateraler Symmetrie bezüglich einer gedachten Ebene von der Grundkörperbasis 24 abgebogen sind, welche die Mittelachse der Bohrung 22 in der Basis 24 enthält, und daß die Aussparungen 34 in den Führungsteilen 18 eine umfänglich geschlossene Form haben, genauer gesagt als zur ebenen Basis 24 parallel verlaufende Langlöcher ausgebildet sind.

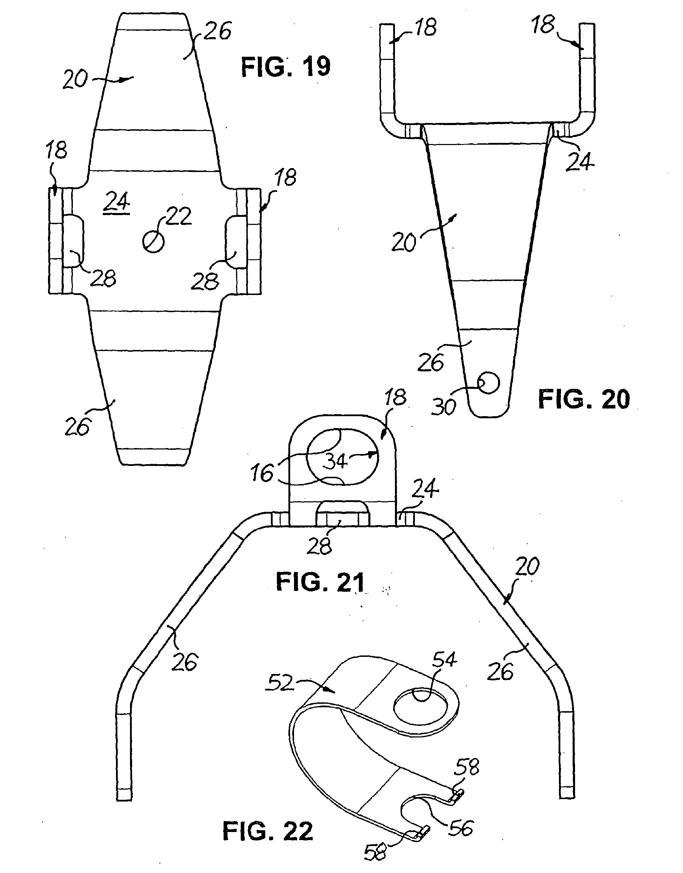

Im Gegensatz zu den vorbeschriebenen Ausführungsbeispielen ist ferner der Schwenkzapfen 14 mittels eines separaten Sicherungselements in der Form eines in Fig. 22 vergrößert dargestellten Federclips 52 aus vorzugsweise Federstahl an der Schaltschiene 10 verliersicher festgelegt. Der Federclip 52 ist in einer Seitenansicht gesehen (vergl. Fig. 17) im wesentlichen C-förmig, mit einem ersten Ende, das eine kreisrunde Öffnung 54 aufweist, deren Innendurchmesser geringfügig größer ist als der Außendurchmesser des Schwenkzapfens 14, und einem zweiten Ende, welches mit einem Schlitz 56, dessen lichte Breite geringfügig kleiner ist als der Außendurchmesser des Schwenkzapfens 14, und zu beiden Seiten des Schlitzes 56 mit nach innen abgekröpften Nasen 58 versehen ist. Der zylindrische Schwenkzapfen 14 hingegen weist in einem mittleren Bereich eine Radialnut 60 auf, die etwas breiter ist als der Federclip 52 dick und deren Nutgrund einen Durchmesser hat, der geringfügig kleiner ist als die lichte Breite des Schlitzes 56 im Federclip 52. Wie die Fig. 14 bis 17 zeigen, greift der Federclip 52 im Bereich seines Schlitzes 56 mit einem Ende in die Radialnut 60 am Schwenkzapfen 14 ein und umgreift die Schaltschiene 10, wobei sich das in den Fig. 14, 16 und 17 obere Ende 46 des Schwenkzapfens 14, welches geringfügig über die Bohrung 40 in der Schaltschiene 10 übersteht, durch die Öffnung 54 am anderen Ende des Federclips 52 hindurch erstreckt. Es ist ersichtlich, daß der Federclip 52 somit den Schwenkzapfen 14 unverlierbar aber bei Bedarf lösbar an der Schaltschiene 10 festlegt.

Zur Herstellung der Vorrichtung gemäß dem dritten Ausführungsbeispiel werden zunächst die Schaltschiene 10, der Grundkörper 20 der Schaltgabel 12, der Schwenkzapfen 14 und der Federclip 52 vorgefertigt, wobei die Schaltschiene 10 lediglich von einem Rundmaterial abzulängen ist, der Grundkörper 20 der Schaltgabel 12 wie anhand des ersten Ausführungsbeispiels beschrieben aus einem Flachmaterial ausgebildet wird und der Schwenkzapfen 14 etwa in einem Drehautomaten mit der Radialnut 60 zu versehen ist. Die Fertigung des Federclips 52 bedarf für den Fachmann keiner näheren Erläuterung.

Sodann werden die Bohrungen 22 und 40 in der Basis 24 des Schaltgabel-Grundkörpers 20 bzw. der Schaltschiene 10 gemeinsam gebohrt. Hierzu wird die Schaltschiene 10 in Richtung ihrer Längsachse durch die Aussparungen 34 in den Führungsteilen 18 der Schaltgabel 12 hindurch gesteckt. In der Folge werden die Schaltschiene 10 und die Schaltgabel 12 ausgerichtet und in zueinander genau justierter Lage festgelegt, wonach die Schaltschiene 10 und die Schaltgabel 12 in dieser festgelegten Relativlage zur Bildung der durchmessergleichen Aufnahmebohrungen 22, 40 für den Schwenkzapfen 14 in einem Bohrvorgang mit einem Bohrer gemeinsam gebohrt werden. Sodann werden Schaltschiene 10 und Schaltgabel 12 wieder voneinander getrennt. Für den Fachmann ist ersichtlich, daß die Montage der Vorrichtung im Kraftfahrzeug-Schaltgetriebe jetzt vornehmlich in axialer Richtung der Schaltschiene 10 erfolgen kann, indem diese bezüglich der Schaltgabel 12 geeignet winkelpositioniert soweit in die Aussparungen 34 in den Führungsteilen 18 der Schaltgabel 12 hinein gesteckt wird bis die Bohrungen 22, 40 in Schaltschiene 10 und Schaltgabel 12 ausgefluchtet sind. Danach kann der Schwenkzapfen 14 in Querrichtung zur Schaltschiene 10 in die Bohrungen 22, 40 eingefügt und durch Queraufschieben des aufgefederten oder auffedernden Federclips 52 an der Schaltschiene 10 gesichert werden, wobei der Federclip 52 im Bereich seines Schlitzes 56 über die Radialnut 60 im Schwenkzapfen 14 geschoben wird und mit seiner Öffnung 54 an dem in den Fig. 14, 16 und 17 oberen Ende 46 des Schwenkzapfens 14 verrastet.

Obgleich bei dem unter Bezugnahme auf die Fig. 14 bis 22 beschriebenen dritten Ausführungsbeispiel der Vorrichtung die Führungsteile 18 einteilig mit dem Grundkörper 20 der Schaltgabel 12 ausgebildet sind, kann es sich hier bei den Führungsteilen auch um zunächst vom Grundkörper der Schaltgabel getrennt hergestellte Führungsteile handeln, die analog dem unter Bezugnahme auf die Fig. 9 bis 13 beschriebenen zweiten Ausführungsbeispiel der Vorrichtung sodann form- und ggf. kraftschlüssig - etwa mittels Warmvernieten entsprechender Vorsprünge an den Führungsteilen oder dem Grundkörper, die Öffnungen in dem jeweils anderen Teil durchgreifen - mit dem Schaltgabel-Grundkörper verbunden werden.

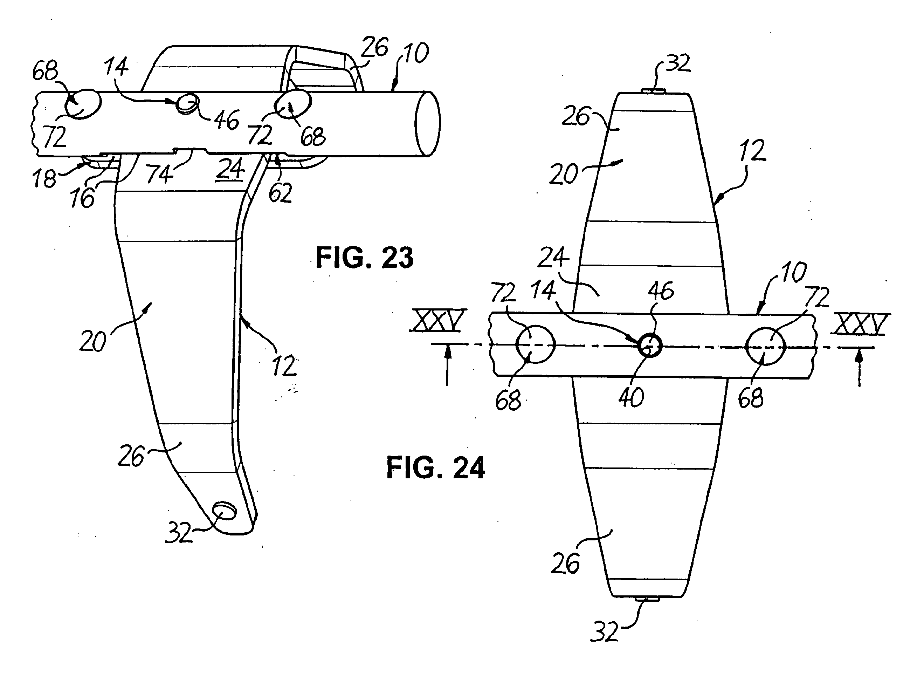

Den Fig. 23 bis 31 ist schließlich ein viertes Ausführungsbeispiel der Vorrichtung zu entnehmen, welches sich von den vorbeschriebenen Ausführungsbeispielen im wesentlichen dadurch unterscheidet, daß ein mit der Schaltschiene 10 fest verbundenes Führungsteil 18 aus einem Flachmaterial eine der Führungsflächen 16 für die Schaltgabel 12 ausbildet.

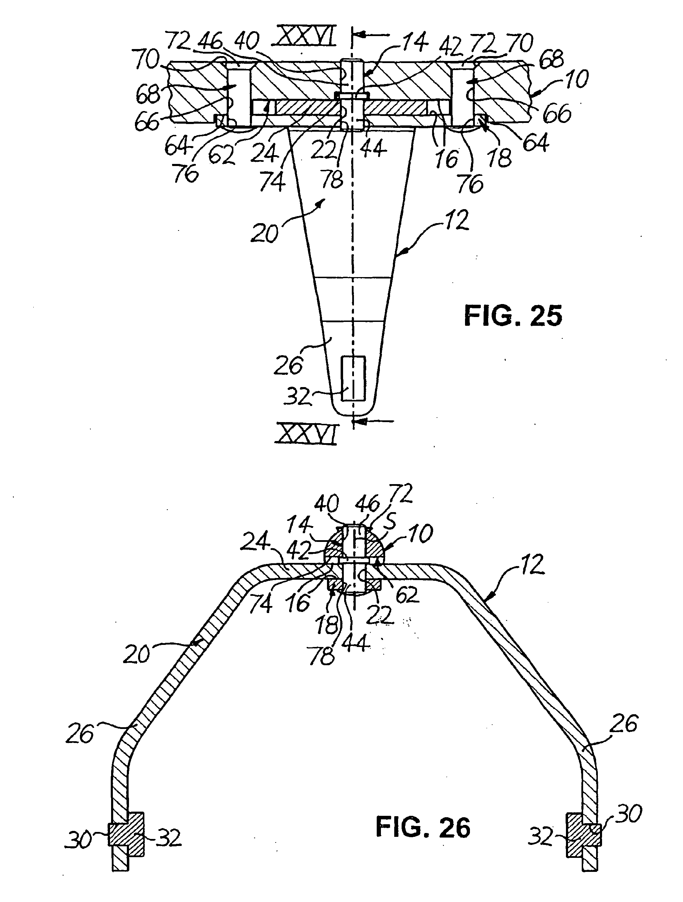

Wie insbesondere die Fig. 23, 25 und 28 zeigen, handelt es sich bei dem Führungsteil 18 der Vorrichtung gemäß dem vierten Ausführungsbeispiel um einen an der Schaltschiene 10 befestigten, ebenen Blechstreifen mit zwei planparallelen Hauptflächen. Gemäß insbesondere der Fig. 25 bildet die in dieser Fig. obere Hauptfläche des Führungsteils 18 eine der Führungsflächen 16 für die Schaltgabel 12 aus, während die Schaltschiene 10 mit einer gestuften, beispielsweise geräumten Ausnehmung 62 versehen ist, welche die andere, in der Fig. 25 obere Führungsfläche 16 ausbildet. Auch bei diesem Ausführungsbeispiel weist die Schaltgabel 12 einen aus einem Flachmaterial hergestellten Grundkörper 20 auf, der im Bereich seiner ebenen Basis 24 mit geringfügigem Bewegungsspiel zwischen der Führungsfläche 16 an der Ausnehmung 62 der Schaltschiene 10 und der Führungsfläche 16 am Führungsteil 18 aufgenommen ist.

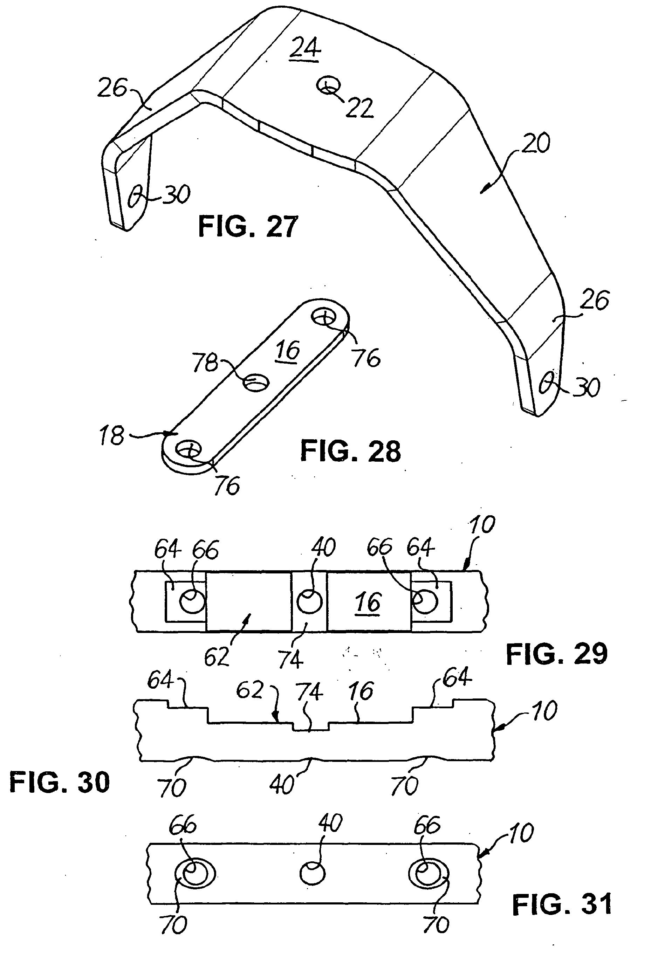

Insbesondere den Fig. 29 und 30 sind Einzelheiten der gestuften Ausnehmung 62 an der Schaltschiene 10 zu entnehmen. Demgemäß hat die Ausnehmung 62 in bilateraler Symmetrie zu beiden Seiten der Führungsfläche 16 eine zu letzterer parallele Auflagerfläche 64 für das Führungsteil 18, wobei jede Auflagerfläche 64 in einer Richtung senkrecht zur Führungsfläche 16 von letzterer um einen Betrag beabstandet ist, der geringfügig größer ist als die Dicke des Schaltgabel-Grundkörpers 20 im Bereich der Basis 24. Ausgehend von jeder Auflagerfläche 64 ist eine durchgehende Befestigungsbohrung 66 senkrecht zur Schaltschienenachse in die Schaltschiene 10 eingebracht, die der Aufnahme eines Befestigungselements, im dargestellten Ausführungsbeispiel eines Niets 68 dient. An ihrem von der Auflagerfläche 64 abgewandten Ende ist jede Befestigungsbohrung 66 mit einer Kegelabsenkung 70 versehen, in der, wie die Fig. 25 zeigt, ein komplementär geformter Nietkopf 72 des jeweiligen Niets 68 aufgenommen ist. Mittig zwischen den Auflagerflächen 64 ist die Ausnehmung 62 in der Schaltschiene 10 an der Führungsfläche 16 schließlich noch mit einer Vertiefung 74 zur Aufnahme des Bunds 42 am Schwenkzapfen 14 (siehe die Fig. 25 und 26) versehen, deren Tiefe geringfügig größer ist als die Breite des Bunds 42 in Längsrichtung des Schwenkzapfens 14.

Gemäß insbesondere Fig. 28 ist auch der das Führungsteil 18 ausbildende Blechstreifen an beiden Längsenden mit jeweils einer durchgehenden Befestigungsbohrung 76 versehen, die hinsichtlich Abstand und Innendurchmesser den Befestigungsbohrungen 66 in der Schaltschiene 10 entsprechen. Schließlich weist das Führungsteil 18 mittig zwischen den Befestigungsbohrungen 66 noch eine durchgehende Bohrung 78 zur Aufnahme des Endes 44 des Schwenkzapfens 14 auf.

Aus Fig. 25 ist ersichtlich, daß, um das Führungsteil 18 an der Schaltschiene 10 zu befestigen, das Führungsteil 18 derart auf die Auflagerflächen 64 an der Ausnehmung 62 der Schaltschiene 10 aufgelegt wird, daß die Befestigungsbohrungen 76 im Führungsteil 18 mit den Befestigungsbohrungen 66 in der Schaltschiene 10 fluchten. Nun können die noch unverformten Niete 68 ausgehend von den Kegelabsenkungen 70 in die Befestigungsbohrungen 66, 76 eingefügt werden, so daß die Niete 68 die Befestigungsbohrungen 66, 76 durchgreifen. Bei Anlage der Nietköpfe 72 an den Kegelabsenkungen 70 werden schließlich die über die Befestigungsbohrungen 76 im Führungsteil 18 vorstehenden Enden der Niete 68 gegen die von der Führungsfläche 16 abgewandte Hauptfläche des Führungsteils 18 warmvernietet, um letzteres an der Schaltschiene 10 festzulegen.

Die Fig. 25 und 26 zeigen auch, daß im montierten Zustand der Vorrichtung der in einem mittleren Bereich mit dem Bund 42 versehene Schwenkzapfen 14 sich auf der einen Seite des Bundes 42 mit seinem in den Fig. unteren Ende 44 durch die Lagerbohrung 22 in der Basis 24 des Schaltgabel-Grundkörpers 20 hindurch in die zentrale Bohrung 78 im Führungsteil 18 hinein erstreckt, während der Schwenkzapfen 14 auf der anderen Seite des Bundes 42 mit seinem in den Fig. oberen Ende 46 die Bohrung 40 in der Vertiefung 74 der Schaltschienen-Ausnehmung 62 durchgreift. Im Ergebnis ist der Schwenkzapfen 14 über den Bund 42 verliersicher an der Vorrichtung gehalten.

Die Vorfertigung des Schwenkzapfens 14 und des Grundkörpers 20 der Schaltgabel 12 erfolgt analog der oben beschriebenen Vorgehensweise. Auch der das Führungsteil 18 ausbildende Blechstreifen kann aus dem Flachmaterial durch Feinschneiden hergestellt werden, wobei zugleich die endseitigen Befestigungsbohrungen 76 erzeugt werden. Zur Vorfertigung der Schaltschiene 10 wird die Ausnehmung 62 unter Ausbildung der Führungsfläche 16, der Auflagerflächen 64 und der Vertiefung 74 z.B. geräumt. In Folgeschritten werden die Befestigungsbohrungen 66 und die Kegelabsenkungen 70 ausgebildet.

Zur Vormontage der Vorrichtung werden die Schaltschiene 10, die Schaltgabel 12 und der das Führungsteil 18 ausbildende Blechstreifen sandwichartig übereinandergelegt. Hierbei erfolgt eine Ausrichtung des Führungsteils 18 bezüglich der Schaltschiene 10 durch z.B. Stifte (nicht gezeigt) einer Montagevorrichtung, die in die Befestigungsbohrungen 66, 76 in Schaltschiene 10 und Führungsteil 18 eingreifen. In der Folge werden die Schaltschiene 10 und der Grundkörper 20 ausgerichtet und in zueinander genau justierter Lage festgelegt, worauf das Führungsteil 18, der Grundkörper 20 und die Schaltschiene 10 in dieser festgelegten Relativlage zur Bildung der durchmessergleichen Aufnahmebohrungen 78, 22 und 40 für den Schwenkzapfen 14 in einem Bohrvorgang mit einem Bohrer gemeinsam gebohrt werden. Nach dem Bohrvorgang werden die gesandwichten Einzelteile wieder auseinandergenommen, der Schwenkzapfen 14 wird wie in den Fig. 25 und 26 gezeigt zwischen Schaltschiene 10 und Schaltgabel 12 eingefügt und das über das Ende 44 des Schwenkzapfens 14 gesetzte Führungsteil 18 wird schließlich wie oben bereits beschrieben mit der Schaltschiene 10 unter Zuhilfenahme der Niete 68 warmvernietet. Die dergestalt vormontierte Vorrichtung kann jetzt im Kraftfahrzeug-Schaltgetriebe in an sich bekannter Weise fertigmontiert werden.

Wenngleich bei den vorbeschriebenen Ausführungsbeispielen die Schaltschiene 10 jeweils aus einem Rundmaterial ausgebildet ist, ist es für den Fachmann ersichtlich, daß die Schaltschiene den jeweiligen Funktions- und Einbauerfordernissen entsprechend auch aus einem Flachmaterial hergestellt werden kann.

Es wird eine Vorrichtung zur Übertragung von Schaltbewegungen in einem Kraftfahrzeug-Schaltgetriebe offenbart, die eine Schaltgabel und eine Schaltschiene aufweist, welche mittels eines rechtwinklig zur Schaltschienenachse gerichteten Schwenkzapfens in Richtung der Schaltschienenachse relativ zueinander unverschiebbar festgelegt sind, wobei die Schaltgabel durch mindestens zwei gegenüberliegende, zueinander planparallele Führungsflächen gegenüber der Schaltschiene geführt um die Schwenkzapfenachse um einen geringen Winkelbetrag relativ zur Schaltschiene verschwenkbar ist, um eine Übertragung von Schwingungen in das Schaltgestänge zu vermeiden. Dabei ist wenigstens eine der Führungsflächen an einem Führungsteil aus einem Flachmaterial ausgebildet, welches fest mit der Schaltgabel oder, alternativ dazu, mit der Schaltschiene verbunden ist. Im Ergebnis wird eine gemessen am Stand der Technik insbesondere in der Massenfertigung kostengünstiger herstellbare Vorrichtung geschaffen, bei der die Schaltgabel gleichwohl toleranzarm an der Schaltschiene schwenkgelagert ist.

### BEZUGSZEICHENLISTE

- 10: Schaltschiene
- 12: Schaltgabel
- 14: Schwenkzapfen
- 16: Führungsfläche
- 18: Führungsteil
- 20: Grundkörper
- 22: Bohrung
- 24: Basis
- 26: Schaltgabelarm
- 28: Aussparung
- 30: Befestigungsbohrung
- 32: Eingriffskörper
- 34: Aussparung
- 36: Ausnehmung
- 38: Gegenfläche
- 40: Bohrung
- 42: Bund
- 44: Ende
- 46: Ende
- 48: Vorsprung
- 50: Öffnung
- 52: Federclip
- 54: Öffnung
- 56: Schlitz
- 58: Nase
- 60: Radialnut
- 62: Ausnehmung
- 64: Auflagerfläche
- 66: Befestigungsbohrung
- 68: Niet
- 70: Kegelabsenkung
- 72: Nietkopf
- 74: Vertiefung
- 76: Befestigungsbohrung
- 78: Bohrung

- S: Schwenkzapfenachse

## Patentansprüche

1. Vorrichtung zur Übertragung von Schaltbewegungen in einem Kraftfahrzeug-Schaltgetriebe, mit einer Schaltgabel (12) und einer Schaltschiene (10), die mittels eines rechtwinklig zur Schaltschienenachse gerichteten Schwenkzapfens (14) in Richtung der Schaltschienenachse relativ zueinander unverschiebbar festgelegt sind, wobei die Schaltgabel (12) durch mindestens zwei gegenüberliegende zueinander planparallele Führungsflächen (16) gegenüber der Schaltschiene (10) geführt um die Schwenkzapfenachse (S) um einen geringen Winkelbetrag relativ zur Schaltschiene (10) verschwenkbar ist und wenigstens eine der Führungsflächen (16) an einem Führungsteil (18) aus einem Flachmaterial ausgebildet ist, welches fest mit der Schaltgabel (12) verbunden ist, **dadurch gekennzeichnet, daß** die Schaltgabel (12) einen Grundkörper (20) aufweist, der aus einem Flachmaterial hergestellt ist und eine in einer Draufsicht gesehen im wesentlichen rechteckige Basis (24) mit zwei Längsseiten und zwei Querseiten aufweist, wobei sich von jeder Querseite ein Schaltgabelarm (26) wegerstreckt, während sich an jede Längsseite ein Führungsteil (18) anschließt, welches von der Basis (24) rechtwinklig abgebogen ist, so daß die Führungsteile (18) einteilig mit dem Grundkörper (20) der Schaltgabel (12) ausgebildet sind.

2. Vorrichtung zur Übertragung von Schaltbewegungen in einem Kraftfahrzeug-Schaltgetriebe, mit einer Schaltgabel (12) und einer Schaltschiene (10), die mittels eines rechtwinklig zur Schaltschienenachse gerichteten Schwenkzapfens (14) in Richtung der Schaltschienenachse relativ zueinander unverschiebbar festgelegt sind, wobei die Schaltgabel (12) durch mindestens zwei gegenüberliegende zueinander planparallele Führungsflächen (16) gegenüber der Schaltschiene (10) geführt um die Schwenkzapfenachse (S) um einen geringen Winkelbetrag relativ zur Schaltschiene (10) verschwenkbar ist und wenigstens eine der Führungsflächen (16) an einem Führungsteil (18) aus einem Flachmaterial ausgebildet ist, welches fest mit der Schaltgabel (12) verbunden ist, **dadurch gekennzeichnet, daß** die Schaltgabel (12) einen Grundkörper (20) aufweist, der aus einem Flachmaterial besteht, wobei das Führungsteil (18) als zunächst vom Grundkörper (20) der Schaltgabel (12) separates Teil hergestellt ist, das form- und ggf. kraftschlüssig mit dem Grundkörper (20) verbunden ist, wofür der Grundkörper (20) der Schaltgabel (12) eine in einer Draufsicht gesehen im wesentlichen rechteckige Basis (24) mit zwei Längsseiten und zwei Querseiten aufweist, wobei sich von jeder Querseite ein Schaltgabelarm (26) wegerstreckt, während sich an jede Längsseite wenigstens ein Vorsprung (48) anschließt, der eine dazu komplementär geformte Öffnung (50) in einem der jeweiligen Längsseite der Basis (24) zugeordneten Führungsteil (18) durchgreift und mit letzterem warmvernietet ist, so daß das jeweilige Führungsteil (18) mit der Basis (24) einen rechten Winkel einschließt.

3. Vorrichtung nach Anspruch 1 oder 2, **dadurch gekennzeichnet, daß** sich die Schaltgabelarme (26) einerseits und die Führungsteile (18) andererseits in Dickenrichtung der Basis (24) gesehen in entgegengesetzte Richtungen von der Basis (24) wegerstrecken.

4. Vorrichtung nach einem der vorhergehenden Ansprüche, **dadurch gekennzeichnet, daß** jedes Führungsteil (18) mit einer Aussparung (34) zur Aufnahme der Schaltschiene (10) versehen ist, wobei jede Aussparung (34) ein Paar planparalleler Führungsflächen (16) aufweist.

5. Vorrichtung nach Anspruch 4, **dadurch gekennzeichnet, daß** die Basis (24) des Schaltgabel-Grundkörpers (20) mit einer zentralen Bohrung (22) zur Aufnahme des Schwenkzapfens (14) versehen ist, wobei die Aussparung (34) jedes Führungsteils (18) als Schlitz ausgebildet ist, der sich parallel zur Basis (24) des Schaltgabel-Grundkörpers (20) erstreckt, und wobei sich die Schlitze in einer Drehrichtung um die Schwenkzapfenachse (S) gesehen in die gleiche Richtung öffnen.

6. Vorrichtung nach Anspruch 5, **dadurch gekennzeichnet, daß** der Schwenkzapfen (14) in einem mittleren Bereich mit einem Bund (42) versehen ist, wobei sich auf der einen Seite des Bundes (42) der Schwenkzapfen (14) mit einem Ende (44) in die zentrale Bohrung (22) in der Basis (24) des Schaltgabel-Grundkörpers (20) hinein erstreckt, während der Schwenkzapfen (14) auf der anderen Seite des Bundes (42) mit seinem anderen Ende (46) in eine Bohrung (40) in der Schaltschiene (10) eingesetzt ist.

7. Vorrichtung nach Anspruch 4, **dadurch gekennzeichnet, daß** der lichte Abstand der Führungsflächen (16) an der Aussparung (34) des jeweiligen Führungsteils (18) einerseits und die Abmessungen der Schaltschiene (10) in einer Richtung senkrecht zur Schaltschienenachse andererseits derart aufeinander abgestimmt sind, daß die Schaltschiene (10) in Richtung der Schaltschienenachse in die Aussparung (34) des jeweiligen Führungsteils (18) einführbar ist, um die Schaltgabel (12) mittels des Schwenkzapfens (14) an der Schaltschiene (10) zu montieren.

8. Vorrichtung nach Anspruch 7, **dadurch gekennzeichnet, daß** die Aussparung (34) eine umfänglich geschlossene Form hat, insbesondere als Langloch ausgebildet ist.

9. Vorrichtung nach Anspruch 7 oder 8, **dadurch gekennzeichnet, daß** der Schwenkzapfen (14) mittels eines Sicherungselements (52) an der Schaltschiene (10) oder der Schaltgabel (12) verliersicher festgelegt ist.

10. Vorrichtung nach Anspruch 9, **dadurch gekennzeichnet, daß** es sich bei dem Sicherungselement um einen Federclip (52) handelt, der in eine am Schwenkzapfen (14) angebrachte Radialnut (60) eingreift und die Schaltschiene (10) umgreift, um den Schwenkzapfen (14) verliersicher an der Schaltschiene (10) festzulegen.

11. Vorrichtung zur Übertragung von Schaltbewegungen in einem Kraftfahrzeug-Schaltgetriebe, mit einer Schaltgabel (12) und einer Schaltschiene (10), die mittels eines rechtwinklig zur Schaltschienenachse gerichteten Schwenkzapfens (14) in Richtung der Schaltschienenachse relativ zueinander unverschiebbar festgelegt sind, wobei die Schaltgabel (12) durch mindestens zwei gegenüberliegende zueinander planparallele Führungsflächen (16) gegenüber der Schaltschiene (10) geführt um die Schwenkzapfenachse (S) um einen geringen Winkelbetrag relativ zur Schaltschiene (10) verschwenkbar ist und wenigstens eine der Führungsflächen (16) an einem Führungsteil (18) aus einem Flachmaterial ausgebildet ist, **dadurch gekennzeichnet, daß** es sich bei dem Führungsteil (18) um einen an der Schaltschiene (10) befestigten, ebenen Blechstreifen handelt, dessen eine Hauptfläche eine der Führungsflächen (16) ausbildet, während die Schaltschiene (10) mit einer Ausnehmung (62) versehen ist, welche die andere Führungsfläche (16) ausbildet, wobei die Schaltgabel (12) einen aus einem Flachmaterial hergestellten Grundkörper (20) aufweist, der im Bereich einer ebenen Basis (24) zwischen der Führungsfläche (16) an der Ausnehmung (62) der Schaltschiene (10) und der Führungsfläche (16) am Führungsteil (18) aufgenommen ist.

12. Vorrichtung nach Anspruch 11, **dadurch gekennzeichnet, daß** das Führungsteil (18) an der Schaltschiene (10) mittels Nieten (68) befestigt ist, die zu beiden Seiten der Ausnehmung (62) Bohrungen (76, 66) im Führungsteil (18) und in der Schaltschiene (10) durchgreifen.

13. Vorrichtung nach Anspruch 11 oder 12, **dadurch gekennzeichnet, daß** der Schwenkzapfen (14) in einem mittleren Bereich mit einem Bund (42) versehen ist, wobei sich auf der einen Seite des Bundes (42) der Schwenkzapfen (14) mit einem Ende (44) in eine zentrale Bohrung (78) im Führungsteil (18) hinein erstreckt, während der Schwenkzapfen (14) auf der anderen Seite des Bundes (42) mit seinem anderen Ende (46) in eine Bohrung (40) in der Ausnehmung (62) der Schaltschiene (10) eingesetzt ist.

## Claims

1. Device for transmitting shift movements in a motor vehicle gearbox, comprising a shift fork (12) and a shift rail (10) which are fixed by means of a pivot pin (14) oriented at right angles to the shift rail axis in such a way that they cannot be displaced relative to one another in the direction of the shift rail axis, wherein the shift fork (12) can be pivoted in a guided manner about the pivot pin axis (S) by a small angle relative to the shift rail (10) by at least two opposite and plane-parallel guide surfaces (16) relative to the shift rail (10), and at least one of the guide surfaces (16) is formed on a guide part (18) made of a flat material which is fixedly connected to the shift fork (12), **characterised in that** the shift fork (12) has a main body (20) which is made from a flat material and has a base (24) which is substantially rectangular when seen in plan view with two longitudinal sides and two transverse sides, wherein a shift fork arm (26) extends away from each transverse side while each longitudinal side is adjoined by a guide part (18) which is bent away from the base (24) at right angles so that the guide parts (18) are formed in one piece with the main body (20) of the shift fork (12) .

2. Device for transmitting shift movements in a motor vehicle gearbox, comprising a shift fork (12) and a shift rail (10) which are fixed by means of a pivot pin (14) oriented at right angles to the shift rail axis in such a way that they cannot be displaced relative to one another in the direction of the shift rail axis, wherein the shift fork (12) can be pivoted in a guided manner about the pivot pin axis (S) by a small angle relative to the shift rail (10) by at least two opposite and plane-parallel guide surfaces (16) relative to the shift rail (10), and at least one of the guide surfaces (16) is formed on a guide part (18) made of a flat material which is fixedly connected to the shift fork (12), **characterised in that** the shift fork (12) has a main body (20) which is made from a flat material, wherein the guide part (18) is produced as a part which is initially separate from the main body (20) of the shift fork (12) and which is connected to the main body (20) with a form fit and optionally a force fit, for which purpose the main body (20) of the shift fork (12) has a base (24) which is substantially rectangular when seen in plan view with two longitudinal sides and two transverse sides, wherein a shift fork arm (26) extends away from each transverse side while each longitudinal side is adjoined by at least one protrusion (48) which passes through an opening (50) of complementary shape in a guide part (18) assigned to the respective longitudinal side of the base (24) and is hot-riveted to said guide part so that the respective guide part (18) encloses a right angle with the base (24).

3. Device according to claim 1 or 2, **characterised in that** the shift fork arms (26) on the one hand and the guide parts (18) on the other hand, as seen in the thickness direction of the base (24), extend in opposite directions from the base (24).

4. Device according to one of the preceding claims, **characterised in that** each guide part (18) is provided with a cutout (34) for receiving the shift rail (10), wherein each cutout (34) has a pair of plane-parallel guide surfaces (16)

5. Device according to claim 4, **characterised in that** the base (24) of the shift fork main body (20) is provided with a central bore (22) for receiving the pivot pin (14), wherein the cutout (34) of each guide part (18) is designed as a slot which extends parallel to the base (24) of the shift fork main body (20), and wherein the slots open in the same direction as seen in a direction of rotation about the pivot pin axis (S).

6. Device according to claim 5, **characterised in that** the pivot pin (14) is provided with a collar (42) in a central region, wherein on one side of the collar (42) the pivot pin (14) extends with one end (44) into the central bore (22) in the base (24) of the shift fork main body (20), while the pivot pin (14) on the other side of the collar (42) is inserted with its other end (46) into a bore (40) in the shift rail (10).

7. Device according to claim 4, **characterised in that** the clear spacing between the guide surfaces (16) on the cutout (34) of the respective guide part (18) on the one hand and the dimensions of the shift rail (10) in a direction perpendicular to the shift rail axis on the other hand are adapted to one another in such a way that the shift rail (10) can be inserted into the cutout (34) of the respective guide part (18) in the direction of the shift rail axis in order to mount the shift fork (12) on the shift rail (10) by means of the pivot pin (14).

8. Device according to claim 7, **characterised in that** the cutout (34) has a substantially closed shape and in particular is designed as an elongate hole.

9. Device according to claim 7 or 8, **characterised in that** the pivot pin (14) is captively fixed by means of a securing element (52) on the shift rail (10) or the shift fork (12).

10. Device according to claim 9, **characterised in that** the securing element is a spring clip (52) which engages in a radial groove (60) formed on the pivot pin (14) and surrounds the shift rail (10) in order to captively fix the pivot pin (14) on the shift rail (10).

11. Device for transmitting shift movements in a motor vehicle gearbox, comprising a shift fork (12) and a shift rail (10) which are fixed by means of a pivot pin (14) oriented at right angles to the shift rail axis in such a way that they cannot be displaced relative to one another in the direction of the shift rail axis, wherein the shift fork (12) can be pivoted in a guided manner about the pivot pin axis (S) by a small angle relative to the shift rail (10) by at least two opposite and plane-parallel guide surfaces (16) relative to the shift rail (10), and at least one of the guide surfaces (16) is formed on a guide part (18) made of a flat material, **characterised in that** the guide part (18) is a flat sheet metal strip which is attached to the shift rail (10), the main surface of said strip forming one of the guide surfaces (16), while the shift rail (10) is provided with a recess (62) which forms the other guide surface (16), wherein the shift fork (12) has a main body (20) which is made from a flat material, which main body is held in the region of a flat base (24) between the guide surface (16) on the recess (62) of the shift rail (10) and the guide surface (16) on the guide part (18).

12. Device according to claim 11, **characterised in that** the guide part (18) is attached to the shift rail (10) by means of rivets (68) which, on both sides of the recess (62), pass through bores (76, 66) in the guide part (18) and in the shift rail (10) .

13. Device according to claim 11 or 12, **characterised in that** the pivot pin (14) is provided with a collar (42) in a central region, wherein on one side of the collar (42) the pivot pin (14) extends with one end (44) into a central bore (78) in the guide part (18), while the pivot pin (14) on the other side of the collar (42) is inserted with its other end (46) into a bore (40) in the recess (62) of the shift rail (10).

## Revendications

1. Dispositif pour la transmission de mouvements de commande dans une boite de vitesses à changement de vitesses d'un véhicule automobile, comprenant une fourchette de commande (12) et un rail de commande (10), qui sont fixés l'un par rapport à l'autre de manière non coulissante dans la direction de l'axe du rail de commande, au moyen d'un tourillon de pivotement (14) orienté perpendiculairement à l'axe du rail de commande, la fourchette de commande (12) pouvant pivoter d'une faible valeur angulaire par rapport au rail de commande (10) autour de l'axe (S) du tourillon de pivotement, en étant guidée par rapport au rail de commande (10) par au moins deux surfaces de guidage (16) planes, parallèles, mutuellement opposées, et au moins l'unes de surfaces de guidage (16) étant formée sur une pièce de guidage (18) en un matériau plat, qui est liée ou assemblée de manière fixe à la fourchette de commande (12),
**caractérisé en ce que** la fourchette de commande (12) comprend un corps de base (20) qui est fabriqué en un matériau plat et présente une base (24) sensiblement rectangulaire en vue de dessus avec deux côtés longitudinaux et deux côtés transversaux, et **en ce qu'**un bras de fourchette de commande (26) s'étend à partir de chaque côté transversal en s'en éloignant, tandis qu'à chaque côté longitudinal se raccorde une pièce de guidage (18) qui est coudée à angle droit de la base (24), de sorte que les pièces de guidage (18) sont réalisées d'un seul tenant avec le corps de base (20) de la fourchette de commande (12).

2. Dispositif pour la transmission de mouvements de commande dans une boite de vitesses à changement de vitesses d'un véhicule automobile, comprenant une fourchette de commande (12) et un rail de commande (10), qui sont fixés l'un par rapport à l'autre de manière non coulissante dans la direction de l'axe du rail de commande au moyen d'un tourillon de pivotement (14) orienté perpendiculairement à l'axe du rail de commande, la fourchette de commande (12) pouvant pivoter d'une faible valeur angulaire par rapport au rail de commande (10) autour de l'axe (S) du tourillon de pivotement, en étant guidée par rapport au rail de commande (10) par au moins deux surfaces de guidage (16) planes, parallèles, mutuellement opposées, et au moins l'unes de surfaces de guidage (16) étant formée sur une pièce de guidage (18) en un matériau plat, qui est liée ou assemblée de manière fixe à la fourchette de commande (12),
**caractérisé en ce que** la fourchette de commande (12) comprend un corps de base (20) qui est réalisé en un matériau plat, et que la pièce de guidage (18) est fabriquée en tant que pièce tout d'abord séparée du corps de base (20) de la fourchette de commande (12), et qui est reliée ou assemblée au corps de base (20) par complémentarité de formes et, le cas échéant, par adhérence, ce pour quoi le corps de base (20) de la fourchette de commande (12) présente une base (24) sensiblement rectangulaire en vue de dessus avec deux côtés longitudinaux et deux côtés transversaux, et **en ce qu'**un bras de fourchette de commande (26) s'étend à partir de chaque côté transversal en s'en éloignant, tandis qu'à chaque côté longitudinal se raccorde au moins une protubérance (48) qui traverse une ouverture (50) de forme complémentaire dans une pièce de guidage (18) associée au côté longitudinal considéré de la base (24), et est liée ou assemblée à cette pièce de guidage par rivetage à chaud, de sorte que la pièce de guidage (18) considérée forme un angle droit avec la base (24).

3. Dispositif selon la revendication 1 ou 2, **caractérisé en ce que** les bras de fourchette de commande (26) d'une part et les pièces de guidage (18) d'autre part, s'étendent à partir de la base (24) dans des directions opposées, vu dans la direction de l'épaisseur de la base (24).

4. Dispositif selon l'une des revendications précédentes, **caractérisé en ce que** chaque pièce de guidage (18) est pourvue d'un évidement (34) destiné à recevoir le rail de commande (10), chaque évidement (34) présentant une paire de surfaces de guidage (16) planes, parallèles.

5. Dispositif selon la revendication 4, **caractérisé en ce que** la base (24) du corps de base (20) de la fourchette de commande est pourvue d'un alésage central (22) destiné à recevoir le tourillon de pivotement (14), l'évidement (34) de chaque pièce de guidage (18) étant réalisé sous forme de fente qui s'étend parallèlement à la base (24) du corps de base (20) de la fourchette de commande, et les fentes s'ouvrant dans la même direction, vu dans une direction de rotation autour de l'axe (S) du tourillon de pivotement.

6. Dispositif selon la revendication 5, **caractérisé en ce que** le tourillon de pivotement (14) est pourvu, dans une zone médiane, d'un collet (42), et **en ce que** sur un côté du collet (42), le tourillon de pivotement (14) s'étend, avec une extrémité (44), à l'intérieur de l'alésage central (22) de la base (24) du corps de base (20) de la fourchette de commande, tandis que le tourillon de pivotement (14), sur l'autre côté du collet (42), est inséré avec son autre extrémité (46), dans un alésage (40) du rail de commande (10).

7. Dispositif selon la revendication 4, **caractérisé en ce que** d'une part la distance d'espacement libre des surfaces de guidage (16) au niveau de l'évidement (34) de la pièce de guidage (18) considérée, et d'autre part les dimensions du rail de commande (10) dans une direction perpendiculaire à l'axe du rail de commande, sont adaptées réciproquement de façon telle, que le rail de commande (10) puisse être introduit dans la direction de l'axe du rail de commande, dans l'évidement (34) de la pièce de guidage (18) respectivement considérée, en vue de monter la fourchette de commande (12) au moyen du tourillon de pivotement (14) sur le rail de commande (10) .

8. Dispositif selon la revendication 7, **caractérisé en ce que** l'évidement (34) présente une forme fermée en périphérie, et est notamment réalisé en tant que trou oblong.

9. Dispositif selon la revendication 7 ou 8, **caractérisé en ce que** le tourillon de pivotement (14) est fixé de manière imperdable au rail de commande (10) ou à la fourchette de commande (12), au moyen d'un élément d'arrêt de sécurité (52).

10. Dispositif selon la revendication 9, **caractérisé en ce qu'**il s'agit en ce qui concerne l'élément d'arrêt de sécurité, d'une agrafe élastique (52) qui s'engage dans une rainure radiale (60) réalisée dans le tourillon de pivotement (14), et entoure le rail de commande (10), en vue de fixer le tourillon de pivotement (14) de manière imperdable au rail de commande (10).

11. Dispositif pour la transmission de mouvements de commande dans une boite de vitesses à changement de vitesses d'un véhicule automobile, comprenant une fourchette de commande (12) et un rail de commande (10), qui sont fixés l'un par rapport à l'autre de manière non coulissante dans la direction de l'axe du rail de commande au moyen d'un tourillon de pivotement (14) orienté perpendiculairement à l'axe du rail de commande, la fourchette de commande (12) pouvant pivoter d'une faible valeur angulaire par rapport au rail de commande (10) autour de l'axe (S) du tourillon de pivotement, en étant guidée par rapport au rail de commande (10) par au moins deux surfaces de guidage (16) planes, parallèles, mutuellement opposées, et au moins l'unes de surfaces de guidage (16) étant formée sur une pièce de guidage (18) en un matériau plat,
**caractérisé en ce qu'**il s'agit en ce qui concerne la pièce de guidage (18) d'une bande de tôle plane, fixée au rail de commande (10), et dont une surface principale forme l'une des surfaces de guidage (16), tandis que le rail de commande (10) est pourvu d'un évidement (62) qui forme l'autre surface de guidage (16), la fourchette de commande (12) présentant un corps de base (20) qui est fabriqué en un matériau plat et est reçu, au niveau de la zone d'une base (24) plane, entre la surface de guidage (16) au niveau de l'évidement (62) du rail de commande (10) et la surface de guidage (16) sur la pièce de guidage (18).

12. Dispositif selon la revendication 11, **caractérisé en ce que** la pièce de guidage (18) est fixée au rail de commande (10) au moyen de rivets (68) qui traversent, de part et d'autre de l'évidement (62), des alésages (76, 66) dans la pièce de guidage (18) et dans le rail de commande (10).

13. Dispositif selon la revendication 11 ou 12, **caractérisé en ce que** le tourillon de pivotement (14) est pourvu, dans une zone médiane, d'un collet (42), et **en ce que** sur un côté du collet (42), le tourillon de pivotement (14) s'étend, avec une extrémité (44), à l'intérieur d'un alésage central (78) dans la pièce de guidage (18), tandis que le tourillon de pivotement (14), sur l'autre côté du collet (42), est inséré avec son autre extrémité (46), dans un alésage (40) de l'évidement (62) du rail de commande (10).
